# EUROPEAN PATENT SPECIFICATION

(11) **EP 4 417 881 B1**
(45) Date of publication and mention of the grant of the patent: **25.11.2026**
(21) Application number: 22881448.9
(22) Date of filing: 20.09.2022
(51) Int. Cl.: F24D 3/14, E04C 1/39, E01C 11/26, E04C 2/52, E04C 2/20, E04C 2/00

(54) **HEAT EXCHANGE PANEL OF A HEAT REGULATING DEVICE**
WÄRMETAUSCHERPLATTE EINER WÄRMEREGELUNGSVORRICHTUNG
PANNEAU ÉCHANGEUR DE CHALEUR DE DISPOSITIF DE THERMORÉGULATION

(30) Priority: 15.10.2021 RU 2021130134
(43) Date of publication of application: 21.08.2024
(73) Proprietor: Anuchka, Anna, 65605 Võru (EE)
(72) Inventor: POTAPOV, VLADIMIR STANISLAVOVICH, Sankt-Peterburg, g. Kolpino, 196655 (RU); MAVLIUTOV, RAFAEL SHAMSITDINOVICH, Sankt-Peterburg, 191036 (RU)
(74) Representative: Botti & Ferrari S.p.A.
(86) International application number: PCT/RU2022/000286
(87) International publication number: WO 2023/063847

(56) References cited:
- EP-A1- 0 360 889
- CN-A- 103 422 650
- CN-U- 203 349 353
- DE-A1- 19 755 856
- JP-A- 2014 062 672
- JP-A- 2015 031 449
- JP-B2- 4 770 813
- JP-B2- 6 340 763
- RU-C1- 2 756 200
- RU-U1- 156 635
- RU-U1- 156 635

## Description

The invention relates to the field of devices and systems for temperature regime regulation both in living and uninhabited premises of any destination, for room heating, in particular, to the panel-radiant systems for heating and cooling, including heated floors and ceiling panels.

### PRIOR ART

From the preceding technical level the decision of a heating element is known disclosed in the patent publication EP 360889 in the form of a panel provided with parallel channels in which a heating cable is placed. The device also contains additional hemispherical modules that are placed between the entries into the channels on two opposite sides of the panel, forming rounded surfaces to which the cable fits tightly during the formation of loops when it is removed from one channel and inserted into the adjacent channel. to prevent cable kinks or fractures. However, this design is difficult in its practical application, and also does not provide uniform maintenance of the temperature regime over the entire surface of the coating formed by the panels.

Also the decision is known from the publication CN103422650 disclosing a method of manufacturing and structure of heating panels (of sandwich-panels type), covered with a heat conducting material (cloth) and consisting of the modules with parallel arrangement of straight and rotary grooves (gutters) of rounded or rectangular form. Said construction has low efficiency because of irregular heat distribution between clean coating over and between the heating contour, due to different heat conductivity characteristics of the insert and the panel materials. This construction is complicated in assemblage, because it needs additional operations of assemblage at the place of installation of all the layers of the heating device coating, and during adjustment of dimension type of the panels for the heated room measurements, as a result of materials used for the insertion and panels making the risk of material buckling increases, both of the heating device coating itself and the clean coating constructions located over. The used pattern of gutters does not allow to change a scheme of laying the heating elements of the heating contour, that narrows possibilities of using this decision on practice.

The decision is known for water warm floors with heating of the firm Thermotech, Sweden, and/or similar decision disclosed in the patent publication DE19755856, containing the flattened base made of a low heat conductivity polymeric material, one of the sides of which is provided with the grooves for installing the heating elements of the heating contour, and a heat-distributive coating located on the base on the side provided with the grooves, where for takeoff and distribution of heat the aluminium plates with special projections with omega-shaped profile, installed on the base of the heating panel, made of foam plastic and provided with linear or bow-shaped grooves with omega-shaped profile for arrangement there of corresponding projections of aluminium plates and for installation in the grooves of the heating elements of the heating contour, in particular, the heating pipes. However, this construction has a range of structural and operational disadvantages, including earlier indicated for the construction disclosed in CN103422650. In particular, the omega-shaped profile, necessary for tight engagement of a heat conducting material to the heating elements of the heating contour and for fixation of their location in heat-distributing elements, is complicated in manufacturing and needs presence of specialized equipment. At that, for making of aluminium plates with projections of omega-shaped profile the use of special alloys is needed, having simultaneously good heat conductivity, rigidity and elastic properties, that, in its turn, results in considerable rise in price of technological process and difficulties for mass production. As well as in the case CN103422650 the plates of specified profile are only suitable for the heating elements of particular section and can not be used in the case of choice of the heating elements with other dimension type, that requires manufacturing of panels with different sections profiles workpieces, that narrows possibilities of quick adaptation of the existing heating panels for dimension type of the heating elements of the heating contour. About 10-15% of the heating panel do not have efficient surface of heat takeoff, distribution and transmission to the clear coating. In addition, the elements of the heating device are the separate components, that during laying results in work execution in several stages. It leads to increase of the mounting terms, as well as to excessive consumption of expensive materials (heat-distributive plates), if during their immediate laying become evident that an error was made at the first stage. At that the heat-distributive plates are provided with additional longitudinal and transversal lines of weakened durability and/or cuts reducing efficiency of heat exchange and uniformity of heat distribution of the whole construction.

From publication of the RF patent for the useful model RU156635 the decision of an universal heat-distributive panel of a heating device is known, containing the flattened base made of a low heat conductivity polymeric material, one of the sides of which is provided with the grooves for installation of the heating elements of the heating contour, and a heat-distributive coating placed on the base on the side provided with grooves. At that, the base and the heat-distributive coating are undetachably joined together by an adhesive junction forming multilayer in vertical direction panel structure, where the base contains a combined set of grooves with straight and bow-shaped sections, the channels of which are joined together with formation of a continuous contour, at that, at least one groove is made open from two end sides of the base, and a heat-distributive coating is made of a high heat conductivity material and contains along the straight sections of the groove the profiled longitudinal goffers, the projection of each of which is a response part of corresponding groove of the base, undetachably joined with it by adhesive junction, forming a panel groove channel with heat-distributive coating, at that the flat surface of a heat-distributive coating over the base groove sections with a bow-shaped channel is provided with perforation along the middle line of the groove contour and cuttings transversal for it ensuring possibility of formation along the line of perforation rupture and leafs cuttings of a heat-distributive coating and their folding inside the cavity of the groove channel. In totality of essential features this decision is the closest to the declared one and is chosen as its prototype. One of the disadvantages of this decision is uneven engagement of the external pipes surface to the adjacent channels walls, conditioned by trapeziform channel section, that reduces efficiency of panel heat exchange. Moreover, the diameter of the pipe 17-20 mm is 1.7-2 times more than width of the groove mouth, i.e. entry in the trapeziform channel, that renders strong pressure on the channel walls, affecting the panel bend and break. All that as a total does not ensure sufficient durability of a construction and promotes its rupture along the axis of longitudinal channels. In order to avoid these problems the base of panel is made reinforced, or the materials with higher transversal stability characteristics are used, or the pressure of the thermal elements on the walls of trapeziform narrowed upwards channels is reduced.

JP 2014/062672 A discloses a radiation panel for cooling/heating operation comprises a foam resin molded body, a water feeding pipe, a joist-shaped member and a thermal diffusion radiation sheet arranged on the surface.

JP 6 340 763 B2 discloses a floor heating panel comprises a main radiation panel arranged at a dining room part and a plurality of auxiliary radiation panels formed to have a smaller area than that of the main radiation panel and arranged at a kitchen part.

JP 2015/031449 A discloses a laying structure of floor heating panel comprises a main radiation panel and a plurality of auxiliary radiation panels.

JP 4 770 813 B2 discloses a pipe fitted to a recessed portion of a heat transfer member, a heat-equalizing plate attached in a state of covering a top face of a plane portion of the heat transfer member and a top face of a base material, and its end portion is bent between the recessed portion and the pipe, and kept into contact with the pipe.

In addition, for all the above mentioned analogs, including a prototype, the disadvantage is also typical resulting of using in the construction a nondetachable adhesive junction of the base with heat-distributive (heat-takeoff) coating, forming during hardening a hard junction, excepting possibility of using these panels in the wide range of temperatures, both at low and high temperatures. Because of difference of thermal widening of joined materials and used glue layer, the last is broken down when the panels are used in conditions of significant temperature jumping and use at low temperatures, that narrows a field of using these panels, as well as their efficiency because of influence on the glue layer during regulation of temperature regime of the served room, including change of regime with intensive heating (for example, in winter) and its actual absence or using cooling systems (for example, in the summer period). In the case of considerable heating, the glue compositions known from the technical level, used for formation of adhesive junctions of the base and a heat-distributive coating of such heat exchange panels are melted down, losing their adhesional properties, that results in breach of the panel integrity and loss of its heat-conducting properties.

Thereby, the problem of widening possibility of effective use of the heat exchange panels of said type for the wide range of temperatures is up to date actual and requiring its decision.

### DISCLOSURE OF THE INVENTION

The technical task solved in the declared invention is creation of a simple universal construction of a heat exchange panel of a heat regulating device where the above mentioned disadvantages of the known technical decisions could be eliminated.

The technical result is higher thermal stability of the heat exchange panel construction in a wide range of temperatures, allowing in such a way to widen sphere of use of said panels both in the heating and cooling systems for living and uninhabited premises without loss of efficiency of heat exchange and universality of their use.

The developed heat exchange panel of the thermoregulating device contains a flattened base made of a low heat conductivity polymer material, having two opposing flat functional sides joined along the contour to narrow lateral sides, at that one of the functional sides has grooves with channels for receiving piping elements of a heat exchange loop, and a heat exchange coating made of a high heat conductivity material, arranged on the surface of the grooved functional side of the base so as to cover both the flat surface thereof and the surface of the grooves channels cavity. The heat exchange coating is made of foil and is adhesively bonded to the surface of the functional side of the base, said bond is fulfilled in a form of a glue coating with "residual tack" of PSA type keeping elasticity in the temperature range from -40 °C up to +100 °C, and the base contains a combined set of grooves with straight and bow-shaped channels bound together with formation of a continuous contour, at that the end sides of the grooves channels joined with the lateral sides of the base are made open.

**In** the preferable variant of realization the glue coating is made on the base of a glue with "residual tack" on the acrylic base.

**In** one of the possible variants of the declared invention realization the heat exchange coating contains along the straight sections of the groove the profiled longitudinal goffers, the projection of each of which is a response part of corresponding groove of the base, at that the flat surface of the heat exchange coating over the base groove sections with bow-shaped channel is provided with perforation along the middle line of the groove contour and the cuttings transversal to it, ensuring possibility of forming along the perforation rupture line and leaf cuttings the heat exchange coating and their folding inside the groove channel cavity.

According to the invention, the base is made of foamed polystyrene and/or polyurethane foam with density no lower than 35 kg/m³. At that the heat exchange coating may be made of aluminium or copper foil.

Also, in one of the preferable variants of the declared invention realization, the channels of each base groove may be fulfilled with cross section of the profile as a turned over omega-shaped form, with horizontally oriented cylindrical lower section of the channel, changing in the upper part to narrow, open from below and from above section of the channel with parallel, perpendicularly oriented lateral sides, forming the groove mouth. At that the width of the groove mouth is preferably made sufficient for passage with an effort of the piping elements of the heat exchange contour, but no less than 0.9 of the maximum width of their cross section, and the diameter of the lower channel part is comparable with maximum width of the cross-section of the piping elements of the heat exchange contour, ensuring possibility of their arrangement in the internal cavity of the lower channel part. At that, in another variant of realization, the mouth width, preferably, does not exceed 10.8 mm, and the diameter of the groove channel does not exceed 22 mm.

In a possible variant of realization the contour of the base grooves channels may include no less than two, crossing the surface of corresponding functional base side, straight sections with the parallel channels, and no less than one rotary groove section with bow-shaped channel, located between the straight sections channels and bound with them forming a common groove contour.

In another variant of the declared invention realization the contour of the base grooves channels may consist of no less than two crossing the surface of the base working side straight sections with the parallel channels and joined with them bow-shaped rotary sections, located between them and/or turn sections in the form of a fragment of a bow of rotary section, joined by one of the sides of the section with the adjacent lateral base side, located symmetrically concerning the symmetry axis of the working surface of the base, in one more variant - concerning its center of symmetry, as well as with possibility of their combination in one more variant of realization, with formation of the common groove contour in each of the indicated variants of realization.

In every variant of realization, the glue coating of the adhesive connection is made in the form of angularly arranged, the angle differs from 0 and 90°, to the direction of the longitudinal and/or transversal axis of the parallel strips, in another variant, preferably at the angle 20-35° to the short side of the rectangular base. At that the strips of the glue coating are made with width 5-10 mm, and a heat exchange coating may be additionally provided with marking in the form of cuttings, arranged along the lines of the sectional division of the panel. At that, the cuttings in one of the variants of realization may be arranged along the orthogonal to the lateral side of the panel surface line, passing through the points of conjugation of straight and rotary section of the groove, at that time in another variant of realization the cuttings may be arranged along the orthogonal to the lateral side of the panel surface line passing through the points of conjugation of straight and figured section of the groove.

### BRIEF DESCRIPTION OF THE DRAWINGS FIGURES

The invention is presented at the following drawings:
Fig. 1a - the base of the heat exchange panel with axisymmetric arrangement of the grooves along the longitudinal axis;
Fig. 1b - the heat exchange coating of the heat exchange panel with axisymmetric arrangement of the grooves along the longitudinal axis;
Fig. 1c - the heat exchange panel with axisymmetric arrangement of the grooves along the longitudinal axis in assemblage;
Fig. 2a - the base of the heat exchange panel with axisymmetric arrangement of the grooves along the longitudinal and transversal axis;
Fig. 2b - the heat exchange panel with axisymmetric arrangement of the grooves along the longitudinal and transversal axis in assemblage;
Fig. 3a - the fragment of the base of the heat exchange panel with applied strips of glue;
Fig. 3b - the fragment of the heat exchange panel with slightly raised heat exchange coating on a part of the heat exchange panel and with glue applied in strips on the base and the heat exchange coating;
Fig. 4 - the top and side views of the heat exchange panel base at the example of the panel with axisymmetric arrangement of the grooves along the longitudinal and transversal axis;
Fig. 5 - examples of some possible variants of the heat exchange panel segmenting (at the example of the panel with axisymmetric arrangement of the grooves along the longitudinal and transversal symmetry axis).

### VARIANTS OF THE INVENTION REALIZATION

In the presented examples their realization is examined with reference, principally, to the decision used in the heated floor construction (warm floor). However, it's evident, that for maintenance in the specified exploitation mode of evenly distributed and constant room temperature, both heating and cooling of the heat exchange panel surface of the thermoregulating device may be executed. So, the invention in addition to ensuring possibility of heating the heat exchange surface of corresponding heat exchange panel, is equally suitable for ensuring efficient heat exchange process and its uniform distribution during cooling of corresponding surface, regardless of used environment keeping uniform temperature. In accordance to the above mentioned, as the heat exchange contour, including the heat exchange elements, in the context of the declared invention the contours are considered, ensuring keeping of constant temperature in the served premises in the specified exploitation mode, for this purpose the contours of both heating and cooling elements may be used, and also working in each of these modes, equally suitable for heating and cooling environment, and also the systems of temperature regime management (thermoregulation) in the room.

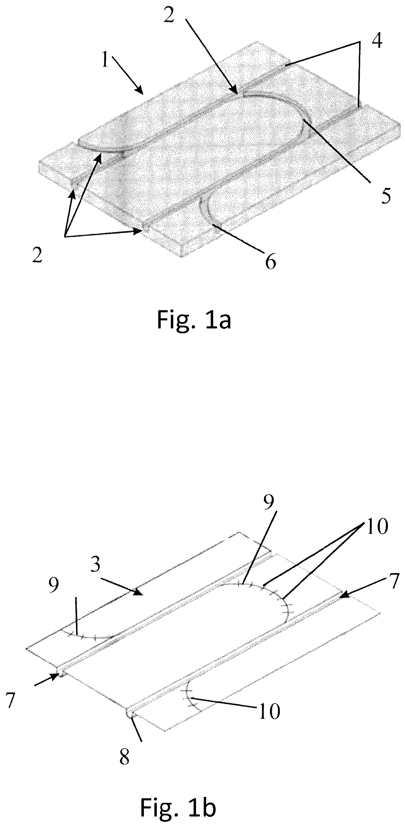

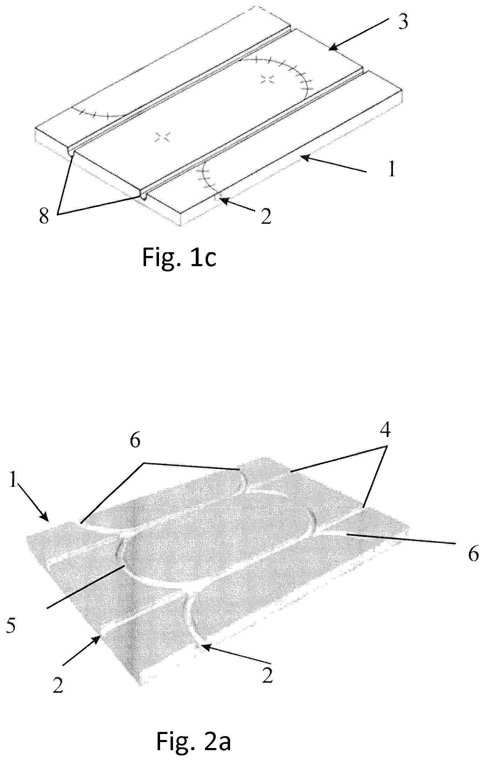

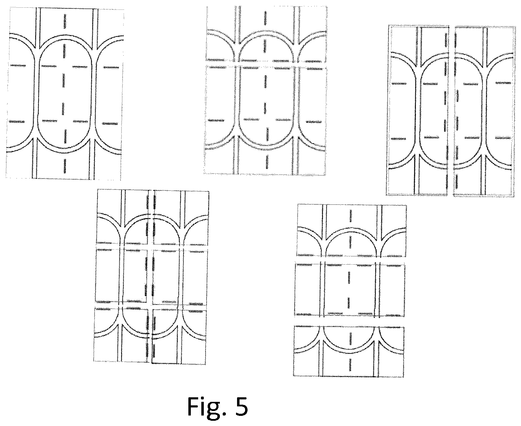

As it follows from the drawings at Figs.1-5, the heat exchange panel consists of the base 1 provided with the grooves 2 for laying of the heat exchange contour elements, and the heat exchange coating 3, joined with the base 1 by means of an elastic adhesive junction, with formation of a multilayer structure of the heat exchange panel in vertical direction.

The flattened base 1 is made of a low heat conductivity polymer material, for example, foamed polystyrene, polyurethane foam, preferably, extruded, with density no less than 35 kg/m³. Realized so by the base 1 supporting layer of the panel prevents heat dispersion to the opposite from joined with the heat exchange coating 3 heat exchange surface side and at the same time ensures sufficient strength of the base, without requiring its additional armoring, during forming the grooves channels contour and laying there the heat exchange contour elements. The base production of a material with the above mentioned physical-chemical properties also ensures possibility of making the grooves channels of the base with every configuration and form, without severe requirements for proportional ratio of the groove height to minimum thickness of the base in the lower point of the groove base, as it is required in the prototype decision, that, from one side, allow to widen possibilities of use in composition of the heat exchange contour of different section pipes, and from another side, allows to form thin bases without loss of heat exchange quality and durability of the heat exchange panel construction. At that, the height of the cross section of the groove channel is preferably higher that the maximum value of height of the heating element cross section no less than by 10%, that allows to ensure reliable fixation of the heat exchange contour in the grooves channels and even heating of the heat-conducting coating. In its turn, for ensuring of heat exchange efficiency and evenness of heat distribution, the heat exchange coating 3, forming the heat exchange layer of the panel, is made of high heat conductivity material, for which, ensuring the required heat conductivity characteristics, observing the sanitary temperature norms and with possibility of efficient maintenance of even heat distribution during a long time, preferably, aluminium or copper foil is used. In the considered example of the declared decision realization, in particular, aluminium foil, for example FG 0.15 x 600 H8011H with 150 mcm thickness, applied on the base of extruded polystyrene foam with 30 mm thickness is used. Produced so, the heat exchange layer and the base ensure in the device even distribution of the heat exchange process over the surface of the clear coating and efficient heat exchange between the adjacent surfaces of the heat exchange panel and the clear coating. In such a way, quick economical achievement of the required temperature regime is gained, with even distribution in all the volume of the served room and maintenance of the required heat exchange characteristics during a long period with lesser energy consumption at the expense of evenness of the heat exchange process over all the surface of the heat exchange coating and with minimum, practically reduced to zero, heat losses in it. As a clear coating in different examples of the declared decision both floor coating, the worm floor elements and wall, ceiling coating may be used, conjugated with the external surface of the heat exchange coating of the declared decision of the heat exchange panel.

According to the declared invention, the heat exchange panel without losses of efficiency keeps its working ability in a wide range of temperatures -40 °C - +100 °C, that is ensured in the declared decision due to the use for joining together the base and the heat exchange coating of the adhesive junction, keeping its elasticity in the indicated working range of temperatures in the process of exploitation.

In the analogs known from the previous technical level for joining the base and the heat exchange coating of the heat exchange panel the adhesive glue is used, with built in it heat endurance limitations of the upper temperature limit (about +55 °C), excluding at that possibility of their use at minus temperatures, for example, as the elements of the cooling systems (especially the snow melting systems, refrigeratory chambers and cooling panels), since at low temperatures (for example, in the cooling systems) traditionally used for junction of the structural elements of the heat exchange panel adhesive material become fragile, that results in peeling of the heat exchange coating from the base, and all the construction ceases physically carry out its functional destination - ensuring of heat exchange, and becomes worthless. At that, at high temperatures, higher than +80 °C, rigid adhesive glue used in the indicated constructions melts down, that results in its re-distribution over the surface and appearance of uneven tension of the coating, promoting its destruction in the places of excess tension. Furthermore, at high values of temperature the adhesive properties of these compositions are lost, that results in weakening of adhesion of the base with the heat exchange coating. At that, even in the working temperature range, a glue (adhesive) junction, known from the previous technical level and used in the prototype decision, quickly becomes hard during junction of the glued surfaces, forming undetachable rigid junction, that in conditions of temperature jumping or unstable temperature regime results in buckling of both the glue junction itself and the surfaces joined with it, owning to the existing difference of the heat widening characteristics of joined materials. Breach of integrity of a glue junction of the heat exchange panel elements results in breach of the heat exchange processes and reduction of their efficiency.

In addition, the deformations of the heat exchange coating in the known decisions are also conditioned by appearing tension in the walls of the piped elements of the heat exchange contour, arranged in the grooves channels of the heat exchange panel, caused by the effect of widening/compression of the piped elements construction at corresponding heating/cooling of a heat carrier, passing inside the heat exchange contour. Widening/compression of the pipes elements affects on the adjacent walls of the channel, including the surface layer, formed by the foiled heat exchange coating, that results in its deformation and breach of the coating integrity. This effect is reinforced in the case of breath of the adhesive junction, due to the above indicated processes of destruction or melting of a glue junction under the influence of changing temperature regime of exploiting and difference of heat widening of conjugated elements of the construction.

In such a way, the constructions known from the technical level quickly lose their operational characteristics and cease to execute their functional destination - ensuring of the required temperature regime in the premises due to even heat exchange process. In is equally true to the heat exchange panels used both in the floors constructions and in the walls and ceilings, provided with the heat exchange contours, working for cooling (up to minus values of temperature) or heating with temperature up to 100 °C.

In contrast to the analogs, in the declared decision as an adhesive junction of the base and the heat exchange coating the glues PSA (Pressure Sensitive Adhesive) are used, which do not become rigid after application on the joined surfaces or their gluing, and remain "constantly tacky" (the so-called glues with "residual tack").

For ensuring working capacity of the heat exchange panel in the required range of temperatures -40°C - + 100°C, it is preferably to use PSA materials on the base of acrylic (modified acrylic), keeping their characteristics in exploiting in the indicated temperature range, that allows to use the heat exchange panel as heat exchange elements in the snow melting systems, storehouse-refrigerators, for heating of roofs, ramps, platforms etc. For achievement of the indicated goal, for example, the glues of the company H.B.Fuller mark Swift^{®}col 9060, Fulltak SE 7614, Fulltak SE 5235 (https://www.klei-kontakt.ru/produktsiya/klei-s-ostatochnoy-lipkostyu/), ERGOTAK (http://termo-klev.ru/termoklev-s-ostatochnoi-lipkostiu), VAPA-ER etc. may be used.

In addition to the above examined properties, the use of such adhesive materials allows to simplify and make more flexible the technological process of the heat exchange panels production at the expense of possibility of including into the production cycle the time ruptures with significant durability, because it is possible to join and glue together the details from several hours up to several days after application of the glue layer.

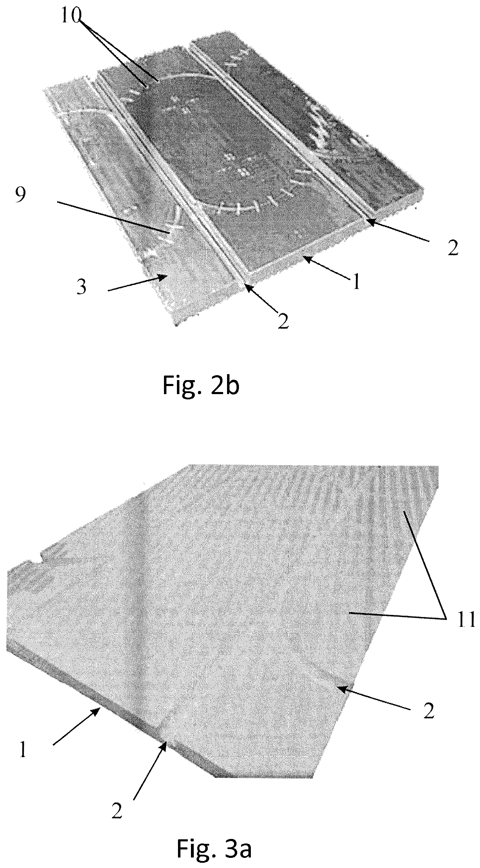

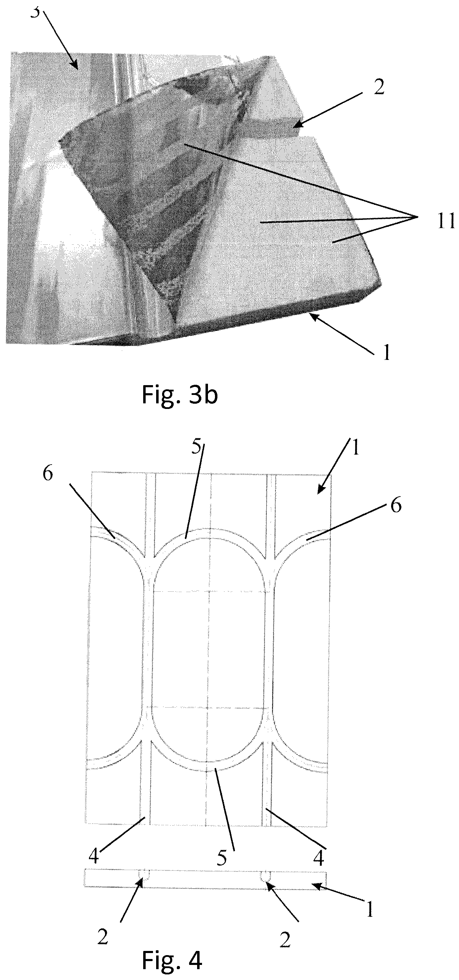

At that the glues with residual tack on the acrylic base have steady internal (cohesion) durability of the glue mass, i.e. high strength for tearing off and displacement. It allows to apply the glue composition economically in the forms of strips 11 (Fig.3a) and b)) with width 5-7 mm with gaps 10-15 mm width. In spite of this economy of glue consumption the construction as a whole keeps its strength between layers both at longitudinal and transversal forces influencing on the layers, including tearing off, compression, widening and/or narrowing.

For application of the adhesive layer by strips on the shaft of the glue-daubing machine the channels are made (for example, at the expense of slits making) with width and depth 5-7 mm retaining glue inside them. The flat surfaces of the shaft between the slits not only clasp an article between the shafts during glue application, pushing it along the movement direction, but also squeeze glue out from the flat surface towards the gutters (slits) making so a convex glue strip on the surface of the foiled element base.

**In** subsequent technological cycle after the heat exchange layer foil joining to the panel base, by means of the calender shaft foil is clasped to the base, as a result a convex part of a glue strip flattens, ensuring high surface engagement and adhesive junction of the layers, ensuring damping of the layers displacement in the process of mounting and exploiting of the ware in different thermal regimes.

Application of an adhesive composition in the form of glue strips with residual tack in comparison with its application in continuous layer, besides economy ensures possibility to apply the glue strips at the angle to the axes of symmetry (longitudinal or transversal symmetry axis) of the panel, that, in its turn, allows to obtain additional technological and operational advantages. So, in contrast to co-directional to the symmetry axis of the panel (longitudinal or transversal) direction of glue application, it is not necessary to center each article in such a way that glue gets not only on the external edges of the element but on the edges of straight and rotary sections of the channels in sufficient amount for durable and even gluing of the foiled heat conducting layer to the plate base. At application of an adhesive composition (glue) in the form of evenly distributed, inclined to the panel symmetry axis strips, glue in sufficient amount gets both on the edges of the joined panel layers and on the borders of the grooves channels, ensuring even junction of the heat exchange coating with the base on all the surface of conjugated layers of the heat exchange panel.

Application of the glue strips inclined to every (longitudinal, transversal) symmetry axis of the panel also allows to exclude glue flowing into the cavity of the base grooves channel, inherent in the heat exchange panels constructions in which adhesive junction is made in the form of continuous coating, or in the form of glue composition application by strips along one of the symmetry axes of the panel. Flowing of glue excess into straight and rotary channels results in partial gluing of the foiled coating to the places of glue flowing, with formation of uneven relief of the channel walls, and formation of the places of excess tension of the foiled coating in the place of its point gluing. In future both these conditions prevents arrangement of the heat exchange contour into the groove and its even coverage by the foiled coating along the external contour. Uneven relief of the foil coating in the channel with formation of the excess tension zone in the places of excess glue flowing with point gluing to them of the foiled coating of the heat exchange layer, as a result, causes breach of integrity and loss of heat exchange properties of the heat exchange coating in the process of mounting of the heat exchange contour into the groove or in the process of exploiting of the heat exchange panel or coating consisting of such type heat exchange panels.

For efficient heat exchange the foiled heat exchange coating must the most closely adjoin to the heat exchange contour and the base surface. For this purpose the foiled heat exchange coating must be glued on the upper surface of engagement and be freely located in the groove channel, ensuring possibility of close coverage and squeezing of the heat exchange contour elements during its mounting in the groove channel. At that the glue layer must have certain "mobility" (elasticity) so that foil does not tear off along the ribs of both straight and rotary channel section. This effect is fully achievable in making the adhesive junction of the base surfaces and heat exchange coating with a glue composition with residual tack, applied in the form of equidistantly located strips inclined regarding the panel symmetry axis. Saving expense of glue at its application by strips reduces risk of its flowing into the channel or formation of glue excess on the external panel borders, at that inclined arrangement of the glue strips excludes also possibility of total absence of glue along the ribs, formed on the external edge of the panel, and also at the boundary of the groove channels, because the inclined strips would always in sufficient amount traverse the indicated ribs, applying sufficient amount of glue for formation of adhesive junction between the base and the heat exchange coating. The foiled coating is with guarantee firmly glued to the panel base and the channels ribs, but at that is free in the channel itself and is not rigidly attached to the base, but, on the contrary, remains movable (elastic) due to the glue properties and free space for manifestation of its cohesion properties.

Since at glue application by inclined strips on all the borders, both external panel borders and borders of straight and rotary grooves channels sections, a sufficient amount of glue mass is formed for retention of the foiled heat exchange coating on the element base, and a distance between the glue strips and intervals without glue is such that a glue amount is sufficient for hold each foil section, even if, for example, glue did not get exactly to the corner of glued foil, independently of direction, fragmentariness and/or number of the lines of the panel cutting onto the fragments (elements) the foiled coating and the plate base always remain fastened with a glue layer, that allows to carry out adjustment of the panel configuration (undercut, fragment) at the place of mounting (laying) in every sides ratio without loss of quality and physical characteristics of the ware.

The glue strips may be applied at the angle different from 90 ° and 0 ° to the line of the element feeding to the glue-daubing machine (perpendicular to the shaft line). As practice shows, the optimum angle is 20-35° to the line of the glue-daubing machine shaft (to the short side of the element) or to the symmetry axis of the panel, that does not require serious increase of width of the working area of the glue machine.

The base 1 contains combined set of the grooves 2 open from above with different configuration, the channels of which are bond together with formation of the continuous contour. According to the declared invention, the continuous contour of the grooves, in particular, in one of the variants of realization, includes no less than two, traversing the surface of corresponding working side of the base straight sections 4 with the channel located in parallel, and no less than one rotary groove section 5 with bow-shaped channel, arranged between the channels of the straight sections and joined with them with formation of the common groove contour. At that the base grooves channels contour in preferable variant contains, at least, two traversing the surface of the working side of the base straight sections with the channel located in parallel and conjugated with them bow-shaped rotary sections, arranged between them, and also the rotary sections 6 in the form of a fragment of the bow of the rotary section, conjugated by one of the sides of the section with adjacent lateral side of the base, arranged symmetrically on the working surface of the base with formation of the common groove contour (Fig.1,4). In other possible variants of the declared decision realization the contour of the grooves channels is made symmetric regarding: one of the symmetry axes of the working surface of the base; the symmetry axes of the working surface of the base; the symmetry center of the working surface of the base. Another variants of formation of the grooves contours are also possible, preferably, arranged in accordance with the chosen principle of symmetry of its sections arrangement. Formation of the common groove contour, including the sections of the groove with the channels of different configuration (straight and bow-shaped) ensures possibility of continuous laying of the heat exchange contour elements according to the chosen laying scheme along the grooves contour, simplifying the mounting process and shortening time for its realization, and also widening possibilities of use in the mounting process of any schemes of heat exchange contour laying thanks to universality of the grooves contour.

It's evident, that according to the declared invention, symmetrically arranged sections of the grooves allow to unify the heat exchange panel also in its practical use. The panels, according to the declared decision, may be easily attached together, since they have symmetric outputs of the channels on the side surface of the panels. Owing to using symmetrical scheme of arrangement of the grooves contour sections the panel may be easily segmented during mounting of the thermoregulating device at the place of its installation, with minimum waste products, since the segmented elements do not lose structure of the channels arrangement and are easily attached together, that significantly shortens time for mounting works and reduces risks of loss of heat exchange efficiency due to inexact joining of the grooves contour and, consequently, breath of integrity of the protective layer formed by the base, in the case of gaps formation and/or breach of integrity of the heat exchange coating at breach of the channel contour, as well as each other external infavourable influences affecting the characteristics of heat exchange, providing by the joined fragmented elements of the heat exchange panel.

Additionally, for convenience of the sectional division of the panel onto the modules, the heat exchange coating may be provided with applied by perforation 9 cuttings 10, fulfilled in direction of the sectional division lines and determining location of the supporting points, through which this lines pass. The indicated modules are always attached together and with adjacent heat exchange panel independently on their spatial orientation and configuration (straight, rotary (flexural)) of the attached adjacent grooves channels, that promotes higher efficiency and evenness of heat exchange over all the surface of the heat exchange coating formed by the indicated panels and modules at their mounting according to the chosen scheme of the heat exchange contour laying, ensuring the most optimum characteristics of heat exchange, based on conditions of the device exploiting, and also promotes significant reduction of production and time expenses for production of the modules with the required configuration of the grooves channels and mounting of the heat exchange device on their base, unachievable using the heating panels known from the precedent technical level.

According to the declared invention, in one of variants of realization, the heat exchange coating 3, elastically, keeping mobility, joined in an adhesive junction by glue with residual tack with the base 1, contains along the channel of straight groove sections 4 conjugated with a flat surface of coating profiled longitudinal goffers 7, in particular, of U-shaped profile, in the form of concave gutters. The projection 8 of each goffer 7 is a response part of the corresponding groove 4 of the base. Presence of the profiled goffer ensures formation of multilayer structure of the panel in the area of the channel of straight groove section. At that, dense engagement of the heat exchange coating both to the base and to the elements of the heat exchange contour underlaid in the channel, promotes higher efficiency of heat exchange of all the surface of the heat exchange coating 3 at the expense of shorter time of attainment of the required temperature regime, and also higher efficiency and evenness of heat exchange over all the surface of the coating 3.

In a possible variant of realization, the heat exchange coating 3 over the bow-shaped groove sections may be fulfilled in the form of flat surface provided with perforation 9 along the middle line of the base groove contour and transversal to it cuttings 10 at the groove width, which in the case of using rotary or figured groove section is broken and closely adjoins to the element of the heat exchange contour, and in the case of non-using the indicated sections during laying of the heat exchange contour, keeps integrity of the heat exchange coating.

Breach of perforation 9 of the heat exchange coating during laying of the elements of the heat exchange contour into a groove channel is realized with simultaneous formation of wings (are not shown at the drawings) on the lateral sides of the channel: from the line fastened by an adhesive junction at the edge of the groove channel of the flat surface of coating to the line of its rupture along the perforation line. At that, the wings formed in such a way are fulfilled with possibility of their folding into the groove cavity. The transversal cuttings 10, in their turn, serve for breakdown of the formed wings onto separate leafs (are not shown at the drawings), ensuring their dense engagement to the heat exchange contour. Division of the wings of the heat exchange coating, formed along the perforation line, onto the leafs, in their turn, formed by the wings ruptures along the line of transversal cuttings, allows to eliminate problems of the heat exchange coating deformation during its arrangement in the bow-shaped channel of the rotary groove section, ensuring so rise of efficiency and evenness of heat exchange.

Higher efficiency of heat exchange of all the construction is ensured because according to the declared decision of the invention the heat exchange coating covers not only flat sections of the surface and the heat exchange contour of the straight grooves sections, but also flexural sections, being for majority of premises about 10-15% of the heated surface, significantly rising evenness and efficiency of heat exchange over all the served surface and possibility of maintenance of the required temperature regime during a long time with lesser energy expenses.

According to the declared invention, the channels of straight, rotary and turn grooves sections of the base, are preferably fulfilled with the profile section in the form of "turned over" omega-shaped form. The width of section in the channel mouth is, preferably, 0.9 of the minimum diameter of used pipeline, i.e. no more than 10.8 mm; the height (diameter) of the channel in its cylindrical part does not exceed 22 mm. So, the upper part of the channel with the cross section contour of the turned over omega-shaped form plays role of the closing lock, letting pass the pipe inside the channel and holding it in the channel, at that shortly influencing only on the entry borders of the channel mouth, not on the channel walls as whole, that excludes influence of the fracture forces on the material of the base in the channel. Moreover, such form reduces risk of influence on the channel walls at linear widening of the pipe inside the channel, in contrast of the trapeziform channel, where the effects of bending and fracture of the panels during significant linear widening of the pipe inside the channel are shown. At that, since the contour of the channel in its cylindrical part repeats the contour of the heat exchange contour element, laid in the channel, and also at the expense of using a mobile elastic adhesive junction, the use of glue with residual tack, the heat exchange layer closely adjoins along the circle to the elements (pipes) of the heat exchange contour, that ensures high efficiency of heat exchange between the heat exchange contour and the heat exchange layer.

At that, the device, according to the invention, work as follows.

The heat exchange panels are laid closely together on the base surface. In the grooves of the panel with the heat exchange coating according the chosen laying scheme the elements of the heat exchange contour, for example, the pipes with a heat carrier or the cables are installed. At that during laying of the heat exchange contour its elements are fixed inside the channel by the "lock", formed by narrowing of the groove channel in the mouth area and closely adjoin to the heat exchange coating in the groove cavity.

### INDUSTRIAL APPLICABILITY

The heat exchange coating of aluminium foil executes heat exchange as a result of its interaction with the heat exchange contour elements, arranged in the channels of the panel base groove and distributes it over all the heat exchange surface of the heat exchange panel, with its subsequent transfer to the buckle or directly to the clear coating laid over the heat exchange coating of the elements.

The base of the heat exchange panel, to which movably, keeping elastic properties in all the working temperature range during the life time of the heat exchange panel, the heat exchange coating layer is glues made of a heat-conducting material, besides the supporting layer it plays role of the heat-insulating layer, preventing from heat losses of all the construction downwards (to the side of the base opposite to the side conjugated with the heat exchange coating), so increasing efficiency of heat transfer upwards (to the side of the clear coating).

In such a way, the declared invention allows to ensure sufficient rise of thermal stability of the heat exchange panel construction in the wide range of temperatures, allowing so to widen field of using said panels both in the heating and cooling systems for living and uninhabitant premises without loss of heat exchange efficiency and universality of their use.

## Claims

1. A heat exchange panel for a heat regulating device, comprising a flattened base (1) made of a low heat conductivity polymer material, having two opposing flat functional sides, joined along the contour to narrow lateral sides, one of the functional sides having grooves (2) with channels for receiving piping elements of a heat exchange loop, and a heat exchange coating (3) made of a high heat conductivity material, arranged on the surface of the grooved functional side of the base covering both the flat surface thereof and the surface of the grooves channels cavity, wherein the heat exchange coating (3) is made of foil and is adhesively joined to the surface of the grooved functional side of the base by means of a glue coating with "residual tack" of PSA type, keeping elasticity in the temperature range from -40°C to +100°C, and the grooved functional side of the base comprises a combined set of grooves with straight and bow-shaped channels, wherein a plurality of panels together can form a continuous contour, since the end sides of the grooves channels, conjugated with the lateral sides of the base of each panel, are made open, wherein the base (1) is made of a polymer material with density no less than 35 kg/m³ of foamed polystyrene or polyurethane foam.

2. The panel according to the claim 1, wherein the heat exchange coating (3) contains along the channel of straight groove sections (4) conjugated with a flat surface of coating the profiled longitudinal goffers (7), in particular, of U-shaped profile, in the form of concave gutters, the projection (8) of each of which is a response part of the corresponding groove of the base, at that the flat surface of the heat exchange coating (3) over the base groove sections (4) with bow-shaped channel is provided with perforation (9) along the middle line of the base groove contour and cuttings (10) transversal to it, ensuring possibility of formation along the line of perforation (9) rupture and leaf cuttings of the heat exchange coating (3) and their folding inside the cavity of the groove channel.

3. The panel according to the claim 1, wherein the heat exchange coating (3) is made of aluminium or copper foil.

4. The panel according to the claim 1 wherein the channels of each base groove are made with cross section of the profile in the form of inverted omega-shaped cross-section, with horizontally oriented cylindrical lower section of the channel, changing in the upper part to narrow, open from below and from above section of the channel with parallel, perpendicularly oriented lateral sides, forming the groove mouth.

5. The panel according to the claim 4, wherein the width of the groove mouth is made sufficient for passage with an effort of the piping elements of the heat exchange contour, but no less than 0.9 of the maximum width of their cross section, and the diameter of the lower channel part is comparable with maximum width of the cross-section of the piping elements of the heat exchange contour, ensuring possibility of their arrangement in the internal cavity of the lower channel part.

6. The panel according to the claim 1, wherein the contour of the base grooves channels includes no less than two, crossing the surface of corresponding working side of the base straight sections (4) with the parallel channels, and no less than one rotary groove section (5) with bow-shaped channel, located between the straight sections channels and bound with them forming a common groove contour.

7. The panel according to the claim 1, wherein the contour of the base grooves channels contains at least two crossing the surface of the base working side of the base straight sections (4) with the parallel channels and joined with them bow-shaped rotary sections, located between them and also rotary sections (6) in the form of a fragment of a bow of rotary section, joined by one of the sides of the section with adjacent lateral base side, located symmetrically on the working side of the base straight sections (4) with formation of a common groove contour.

8. The panel according to the claim 7, wherein the groove channels contour is made symmetric concerning the symmetry axes of the working side of the base straight sections (4) and the grooves channels contour is made symmetric concerning the symmetry center of the working side of the base straight sections (4).

9. The panel according to the claim 1, wherein the heat exchange coating (3) is additionally provided with marking in the form of the cuttings located along the lines of sectional division of the panel.

## Patentansprüche

1. Wärmeaustauschplatte für eine Wärmeregelungsvorrichtung, umfassend eine abgeflachte Basis (1), die aus einem Polymermaterial mit geringer Wärmeleitfähigkeit hergestellt ist, die zwei gegenüberliegende flache Funktionsseiten aufweist, welche entlang des Umrisses zu schmalen lateralen Seiten zusammengefügt sind, wobei eine der Funktionsseiten Nuten (2) mit Kanälen zum Aufnehmen von Rohrleitungselementen einer Wärmeaustauschschleife aufweist, und eine Wärmeaustauschbeschichtung (3), die aus einem Material mit hoher Wärmeleitfähigkeit hergestellt ist, die auf der Oberfläche der gerillten Funktionsseite der Basis angeordnet ist, welche sowohl die flache Oberfläche davon als auch die Oberfläche des Hohlraums der Nutkanäle abdeckt, wobei die Wärmeaustauschbeschichtung (3) aus einer Folie hergestellt ist und haftend mit der Oberfläche der gerillten Funktionsseite der Basis mittels einer Klebbeschichtung mit "Klebrigkeit" vom PSA-Typ zusammengefügt ist, wodurch die Elastizität in dem Temperaturbereich von -40 °C bis +100 °C gehalten wird, und die gerillte Funktionsseite der Basis einen kombinierten Nutsatz mit geraden und bogenförmigen Kanälen umfasst, wobei eine Vielzahl von Platten zusammen einen kontinuierlichen Umriss ausbilden kann, da die Endseiten der Nutkanäle, die mit den lateralen Seiten der Basis jeder Platte konjugiert sind, geöffnet werden, wobei die Basis (1) aus einem Polymermaterial mit einer Dichte von nicht weniger als 35 kg/m³ geschäumtem Polysterol oder Polyurethanschaum hergestellt ist.

2. Platte nach Anspruch 1, wobei die Wärmeaustauschbeschichtung (3) entlang des Kanals gerader Nutabschnitte (4), der mit einer flachen Beschichtungsoberfläche konjugiert ist, die längsprofilierten Bleche (7), insbesondere mit U-förmigem Profil, in der Form konkaver Rinnen enthält, wobei der Vorsprung (8) jeder dieser ein Reaktionsteil der entsprechenden Nut der Basis darauf ist, dass die flache Oberfläche der Wärmeaustauschbeschichtung (3) über den Basisnutabschnitten (4) mit bogenförmigem Kanal mit einer Perforation (9) entlang der Mittellinie des Basisnutumrisses und Verschnitten (10) quer zu ihr versehen ist, wodurch die Möglichkeit einer Ausbildung entlang der Perforationslinie (9) von Bruch- und Blattschnitten der Wärmeaustauschbeschichtung (3) und ihrer Faltung im Inneren des Hohlraums des Nutkanals sichergestellt ist.

3. Platte nach Anspruch 1, wobei die Wärmeaustauschbeschichtung (3) aus Aluminium- oder Kupferfolie hergestellt ist.

4. Platte nach Anspruch 1, wobei die Kanäle jeder Basisnut mit einem Querschnitt des Profils in der Form eines umgekehrten Omega-förmigen Querschnitts, mit einem horizontal ausgerichteten zylindrischen unteren Abschnitt des Kanals, der sich in dem oberen Teil zu einem schmalen, von unten und von oben offenstehenden Abschnitt des Kanals mit parallelen, senkrecht ausgerichteten lateralen Seiten ändert und die Nutmündung ausbildet, hergestellt sind.

5. Platte nach Anspruch 4, wobei die Breite der Nutmündung zum Durchtritt mit einer Anstrengung der Rohrleitungselemente des Wärmeaustauschumrisses ausreichend hergestellt ist, aber nicht weniger als 0,9 der maximalen Breite ihres Querschnitts beträgt, und der Durchmesser des unteren Kanalteils vergleichbar mit einer maximalen Breite des Querschnitts der Rohrleitungselemente des Wärmeaustauschumrisses ist, wodurch die Möglichkeit ihrer Anordnung in dem inneren Hohlraum des unteren Kanalteils sichergestellt ist.

6. Platte nach Anspruch 1, wobei der Umriss der Basisnutkanäle nicht weniger als zwei beinhaltet, welcher die Oberfläche einer entsprechenden Arbeitsseite der geraden Basisabschnitte (4) mit den parallelen Kanälen überquert, und nicht weniger als einen Drehnutabschnitt (5) mit bogenförmigem Kanal beinhaltet, der zwischen den Kanälen gerader Abschnitte angeordnet ist und mit ihnen verbunden ist, wodurch ein gemeinsamer Nutumriss ausgebildet wird.

7. Platte nach Anspruch 1, wobei der Umriss der Basisnutkanäle mindestens zwei beinhaltet, welcher die Oberfläche der Basisarbeitsseite der geraden Basisabschnitte (4) mit den parallelen Kanälen überquert und mit ihnen zusammengefügt ist, bogenförmige Drehabschnitte, die zwischen ihnen angeordnet sind, und auch Drehabschnitte (6) in der Form eines Fragments eines Drehabschnittbogens, die mit einer der Seiten des Abschnitts mit benachbart lateraler Basisseite zusammengefügt sind, die symmetrisch auf der Arbeitsseite der geraden Basisabschnitte (4) mit Ausbildung eines gemeinsamen Nutumrisses angeordnet sind.

8. Platte nach Anspruch 7, wobei der Umriss der Nutkanäle symmetrisch bezüglich der Symmetrieachsen der Arbeitsseite der geraden Basisabschnitte (4) hergestellt ist und der Umriss der Nutkanäle symmetrisch bezüglich der Symmetriemitte der Arbeitsseite der geraden Basisabschnitte (4) hergestellt ist.

9. Platte nach Anspruch 1, wobei die Wärmeaustauschbeschichtung (3) zusätzlich mit einer Markierung in der Form der Verschnitte versehen ist, die entlang der Linien einer abschnittsweisen Unterteilung der Platte angeordnet sind.

## Revendications

1. Panneau échangeur de chaleur pour un dispositif de thermorégulation, comprenant une base aplatie (1) faite d'un matériau polymère à faible conductivité thermique, ayant deux côtés fonctionnels plats opposés, joints le long du contour à des côtés latéraux étroits, l'un des côtés fonctionnels ayant des rainures (2) avec des canaux pour la réception d'éléments de tuyauterie d'une boucle d'échange de chaleur, et un revêtement d'échange de chaleur (3) fait d'un matériau à haute conductivité thermique, agencé sur la surface du côté fonctionnel rainuré de la base couvrant à la fois la surface plate de celui-ci et la surface de la cavité de canaux de rainures, dans lequel le revêtement d'échange de chaleur (3) est fait d'une feuille et est joint de manière adhésive à la surface du côté fonctionnel rainuré de la base au moyen d'un revêtement de colle avec un « pouvoir collant résiduel » de type PSA, conservant une élasticité dans la plage de températures de - 40 °C à +100 °C, et le côté fonctionnel rainuré de la base comprend un ensemble combiné de rainures avec des canaux droits et en forme d'arc, dans lequel une pluralité de panneaux peuvent former ensemble un contour continu, étant donné que les côtés d'extrémité des canaux de rainures, conjugués aux côtés latéraux de la base de chaque panneau, sont rendus ouverts, dans lequel la base (1) est faite d'un matériau polymère avec une densité non inférieure à 35 kg/m³ de polystyrène expansé ou de mousse de polyuréthane.

2. Panneau selon la revendication 1, dans lequel le revêtement d'échange de chaleur (3) contient, le long du canal de sections de rainure droites (4) conjuguées à une surface plate de revêtement, les gaufrages longitudinaux profilés (7), en particulier, de profil en forme de U, sous la forme de gouttières concaves, dont la projection (8) de chacune est une partie de réponse de la rainure correspondante de la base, où la surface plate du revêtement d'échange de chaleur (3) au-dessus des sections de rainure de base (4) avec un canal en forme d'arc est pourvue d'une perforation (9) le long de la ligne médiane du contour de rainure de base et de découpes (10) transversales à celle-ci, garantissant une possibilité de formation le long de la ligne de perforation (9) d'une rupture et de découpes de feuille du revêtement d'échange de chaleur (3) et de leur pliage à l'intérieur de la cavité du canal de rainure.

3. Panneau selon la revendication 1, dans lequel le revêtement d'échange de chaleur (3) est fait d'une feuille d'aluminium ou d'une feuille de cuivre.

4. Panneau selon la revendication 1, dans lequel les canaux de chaque rainure de base sont faits avec une section transversale du profil sous la forme d'une section transversale en forme d'oméga inversé, avec une section inférieure cylindrique orientée horizontalement du canal, se changeant dans la partie supérieure en une section du canal étroite, ouverte par le bas et par le haut avec des côtés latéraux parallèles, orientés perpendiculairement, formant l'embouchure de rainure.

5. Panneau selon la revendication 4, dans lequel la largeur de l'embouchure de rainure est rendue suffisante pour le passage avec un effort des éléments de tuyauterie du contour d'échange de chaleur, mais non inférieure à 0,9 de la largeur maximale de leur section transversale, et le diamètre de la partie de canal inférieure est comparable à la largeur maximale de la section transversale des éléments de tuyauterie du contour d'échange de chaleur, garantissant une possibilité de leur agencement dans la cavité interne de la partie de canal inférieure.

6. Panneau selon la revendication 1, dans lequel le contour des canaux de rainures de base n'inclut pas moins de deux sections droites (4), traversant la surface du côté de travail correspondant de la base, avec les canaux parallèles, et pas moins d'une section de rainure rotative (5) avec un canal en forme d'arc, située entre les canaux de sections droites et liée à eux formant un contour de rainure commun.

7. Panneau selon la revendication 1, dans lequel le contour des canaux de rainures de base contient au moins deux sections droites de base (4), traversant la surface du côté de travail de base de la base, avec les canaux parallèles et jointes avec elles des sections rotatives en forme d'arc, situées entre elles et également des sections rotatives (6) sous la forme d'un fragment d'un arc de section rotative, jointes par l'un des côtés de la section à un côté de base latéral adjacent, situées symétriquement sur le côté de travail des sections droites de base (4) avec la formation d'un contour de rainure commun.

8. Panneau selon la revendication 7, dans lequel le contour de canaux de rainure est rendu symétrique concernant les axes de symétrie du côté de travail des sections droites de base (4) et le contour de canaux de rainures est rendu symétrique concernant le centre de symétrie du côté de travail des sections droites de base (4).

9. Panneau selon la revendication 1, dans lequel le revêtement d'échange de chaleur (3) est en outre pourvu d'un marquage sous la forme des découpes situées le long des lignes de division sectionnelle du panneau.
